# EUROPEAN PATENT APPLICATION

(11) **EP 4 763 579 A1**
(43) Date of publication of application: **24.06.2026**
(21) Application number: 25224057.7
(22) Date of filing: 16.12.2025
(51) Int. Cl.: B60L 3/00, B60L 58/12

(54) **ROAD VEHICLE COMPRISING A DEVICE FOR MONITORING A BATTERY PACK DURING A SLEEP MODE OF THE ROAD VEHICLE**

(30) Priority: 17.12.2024 IT 202400028767
(71) Applicant: FERRARI S.p.A., 41100 Modena (IT)
(72) Inventor: CODOVILLI, Francesco, 41100 Modena (IT)
(74) Representative: Studio Torta S.p.A.

(57) **Abstract**

A road vehicle (1) comprising a high-voltage (HV) electric circuit (8) provided with a first storage system (6) comprising a plurality of cells; a low-voltage (LV) electric circuit (9) provided with a second storage system (10); a first control unit (12) configured to monitor and manage the first storage system (6), i.e., the battery pack; a second control unit (13), different from the first control unit (12), which is configured to operate when the road vehicle (1) is in a sleep mode, during which the first control unit (12) is turned off; the second control unit being configured to monitor at least voltage and temperature of the plurality of cells of the first storage system (6).

## Description

### CROSS-REFERENCE TO RELATED APPLICATIONS

This patent application claims priority from Italian patent application no. 102024000028767 filed on December 17, 2024, the entire disclosure of which is incorporated herein by reference.

### TECHNICAL FIELD

This invention relates to a road vehicle comprising a device for monitoring a battery pack during a sleep mode of the road vehicle.

In particular, this invention is advantageously, but not exclusively, applicable in a high-performance electric (or hybrid) road vehicle, to which the following description specifically refers without any loss of generality thereby.

### BACKGROUND OF THE INVENTION

Hybrid or electric vehicles (EV/PHEV/BEV) equipped with at least one electric machine are known; the electric machine is electrically connected to an electrical energy storage system, that is, a battery pack, and mechanically connected to the drive wheels to transmit drive torque to them.

The electrical system of a hybrid or electric vehicle usually comprises a high-voltage (in a relative sense, it might even have a nominal voltage of only 48 volts) and high-power electric circuit to which the electric machine is connected; the high-voltage electric circuit comprises a storage device (equipped with at least one electrochemical battery pack, for example with lithium-ion or lithium polymer batteries) and a bi-directional electronic DC to AC power converter, which on the DC side is connected to the storage device and on the AC side is connected to the electric machine and has the function of driving the electric machine.

The electrical system of such vehicles also comprises a low-voltage (generally having a nominal voltage of 12 volts) and low-power electric circuit to which all auxiliary electric services are connected (for example, the control units of all the vehicle subsystems, the infotainment system, the anti-theft system, the passenger compartment lighting system, the exterior lights, the electric starter motor of the thermal engine in the case of hybrid vehicles, etc.).

In particular, the low-voltage electric circuit normally also comprises the so-called BMS (Battery Management System) of the high-voltage storage device. This known system is responsible for managing and monitoring the vehicle's battery pack. In particular, the BMS deals with, among other things:
- monitoring the health of the battery pack, ensuring that it functions correctly and safely.
- managing battery charging and discharging, optimising battery pack performance and service life.
- preventing critical situations such as overcurrent's, short circuits or accidents by breaking the connection between the battery and the rest of the high-voltage circuit if necessary.

In summary, the BMS is essential to ensure the safety, efficiency and longevity of the energy storage system in road vehicles.

However, the Battery Management System (BMS) is not always active. In particular, when an electric or hybrid road vehicle enters "sleep" mode, for example during a long stop, the BMS is switched off to limit battery pack consumption.

With this switching-off, in the event of a thermal event within the battery pack, that is, an abnormal increase in temperature within the battery pack, which can be caused by various factors, such as a short circuit, an overload, or a malfunction of the battery cells, the vehicle is unable to intervene quickly, resulting in a significant risk of fire and danger to those in the vicinity of the vehicle.

To avoid these unfortunate events, one could leave the BMS switched on all the time by fitting a battery pack of increased capacity specifically to continuously power the BMS. However, in high-performance vehicles there is always a need to reduce weight and bulk in order to maximise vehicle performance, for example on the track, and the addition of additional battery modules, with their associated weights, is not easily implemented. Furthermore, to maximise performance it is important that, even after a sleep mode, the vehicle is as fully charged as possible.

Therefore, the need to reduce the risk of fire without excessively increasing the vehicle weight, while maintaining or even increasing the safety of the road vehicle in critical situations, appears to be felt.

### DESCRIPTION OF THE INVENTION

The purpose of this invention is to provide a road vehicle comprising a device for monitoring a battery pack during a sleep mode of the road vehicle, which is at least partially free of the drawbacks described above and, at the same time, is convenient and economical to produce.

In accordance with this invention, a road vehicle comprising a device for monitoring a battery pack during a sleep mode of the road vehicle is provided according to what is claimed in the independent claims below and, preferably, in any of the claims dependent directly or indirectly on the independent claims.

The claims describe preferred embodiments of this invention forming an integral part of this description.

### BRIEF DESCRIPTION OF THE DRAWINGS

This invention will now be described with reference to the accompanying drawings that illustrate some non-limiting embodiments thereof, in which:
- Figure 1 is a schematic plan view, with details removed for clarity, of a road vehicle in accordance with one embodiment of this invention;
- Figure 2 is a schematic view of a first non-limiting embodiment of part of the electrical system of the road vehicle in Figure 1;
- Figure 3 is a schematic view of a second non-limiting embodiment of part of the electrical system of the road vehicle in Figure 1.

### DETAILED DESCRIPTION

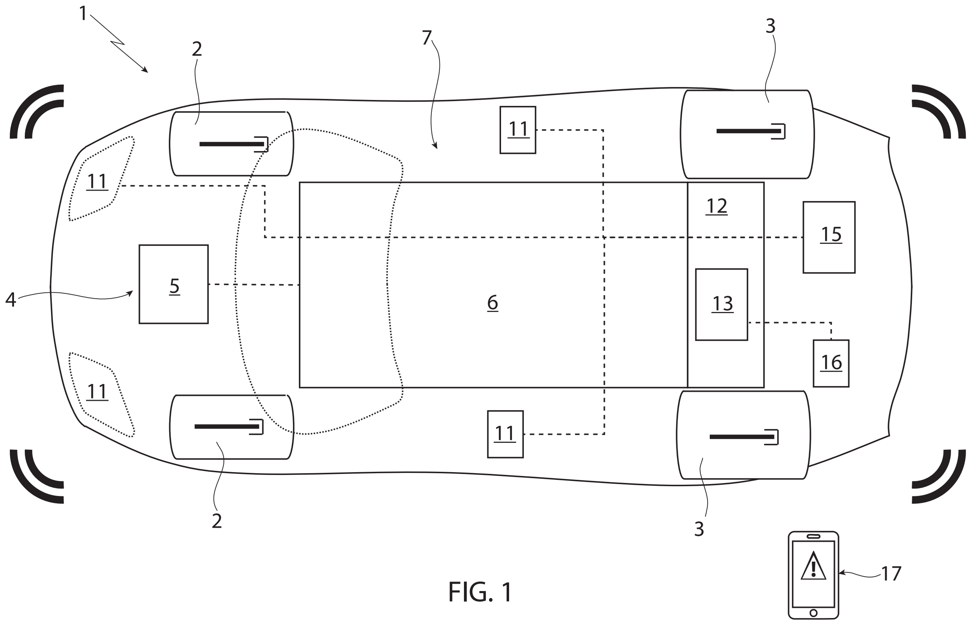

In Figure 1, the reference number 1 generically denotes, as a whole, a road vehicle equipped with two front wheels 2 and two rear wheels 3, of which at least one pair (or all) receive drive torque from an electric or hybrid powertrain system 4. The powertrain system 4 can be either purely electric (that is, comprising only one or more electric motors) or hybrid (that is, comprising an internal combustion engine and at least one electric motor).

The same reference numbers and letters in the figures identify the same elements or components with the same function.

In the context of this description the term "second" component does not imply the presence of a "first" component. These terms are in fact used as tags to improve clarity and should not be understood in a limiting way.

The elements and features disclosed in the various preferred embodiments, including the drawings, may be combined with one another without, however, departing from the scope of protection of this application as described below.

The powertrain system 4 preferably comprises at least one electric machine 5 which is driven by an electronic converter (of a known type not illustrated) of AC/DC power (that is, an "inverter") that is connected to a first electrical energy storage system 6 equipped with chemical batteries. The first electrical energy storage system 6 is a vehicle battery pack, itself comprising multiple electrochemical cells, for example lithium-ion cells.

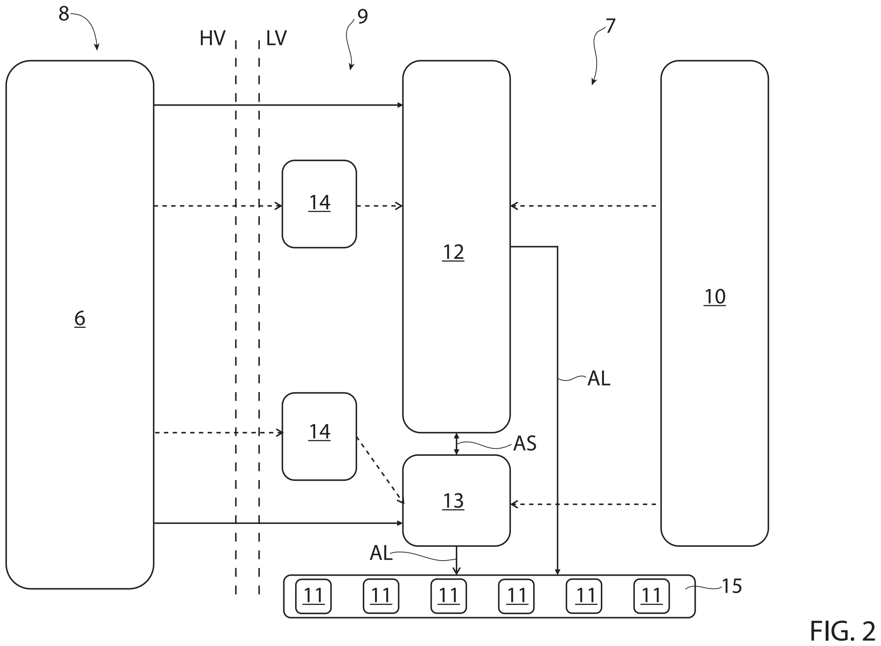

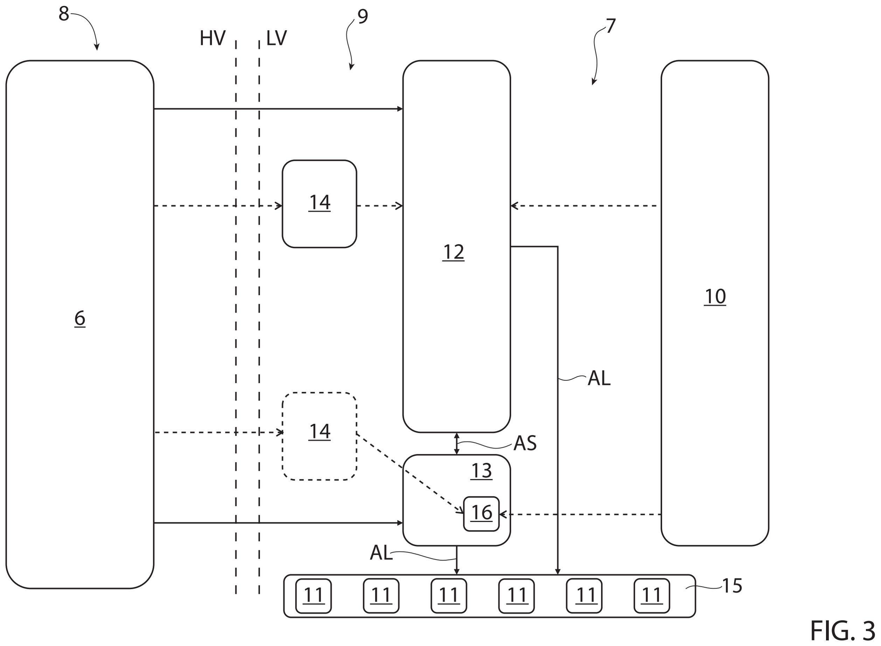

In addition, the road vehicle 1 comprises an electrical system 7 (schematically illustrated and with details removed for clarity in Figures 2 and 3), which comprises a high-voltage HV (in the relative sense, by way of non-limiting example with a nominal voltage of 1200, 800 or 400 or 48 volts) electric circuit 8 and a low-voltage LV electric circuit 9 (for example with a nominal voltage of 12 volts).

It is important to note that the electric circuit 8 is referred to as *"high voltage"* in that it has a nominal voltage (1200 V, 800 V, 400 V, 48 V) greater than the nominal voltage (12 V) of the electric circuit 9, that is, the definition of *"high voltage"* is to be understood as relative only to the electrical system 7 and with reference to the electric circuit 19 having a nominal voltage of 12 volts.

The high-voltage HV electric circuit 8 comprises the first storage system 6 and the electric machine 5 (that is, the stator windings of the electric machine 5). For simplicity's sake, in Figure 2 the high-voltage HV electric circuit 8 only comprises at least the first storage system 6. In particular, the first storage system 6 is configured to power the electric machine 5.

According to some preferred, non-limiting embodiments, the low-voltage LV electric circuit 9 comprises a second storage system 10 (also, of course, at the same voltage as the electric circuit 9) and multiple electrical loads 11, each of which is only capable of absorbing electrical energy for its own operation (that is, none of these electrical loads 11 can generate electrical energy). In other words, the second storage system 10 is configured to power the multiple electrical loads 11.

The second storage system 10 has a lower voltage than the first storage system 6.

Advantageously, but not necessarily, the electrical loads 11 comprise, for example, an alarm system, the horn, an infotainment system, electronic inverter control units, BMS, steer-by-wire, active suspension, exterior lights, an air-conditioning system (not shown), window operation, the car radio, the navigation system, a system for connecting with the user's smartphone or emergency signalling, etc.

In the preferred but non-limiting embodiment in Figures 2 and 3, the electrical system 7 also comprises a control unit 12 ("ECU"). Physically, the control unit 12 may consist of a single device or of several separate devices communicating with each other via the CAN network or any other road vehicle 1 data network.

The control unit 12 preferably comprises (is) a BMS management system of the first storage system 6 powered by the second storage system 10. In particular, the BMS management system is configured to monitor the correct health of the above-mentioned cells and to manage the first storage system 6 by means of known techniques not further detailed, as mentioned above.

In the non-limiting embodiment in Figures 2 and 3, the dashed lines indicate how the respective elements are powered, while the solid lines indicate an exchange of data and their transfer direction.

Advantageously, the vehicle comprises a second control unit 13, different from the first control unit 12, which is configured to operate when the road vehicle 1 is in sleep mode, for example after a long stop, during which the first control unit 12, that is, the BMS, is switched off.

The second control unit 13 is configured to monitor at least voltage and temperature of the multiple cells of the first storage system 6, that is, the vehicle battery pack.

In particular, this monitoring is carried out by connecting the second control unit 13 to devices known as CSCs (Cell Sensor Circuits), which are decentralised components of the BMS of a known type that take care of cell balancing and temperature and voltage monitoring for each cell or for a limited group of cells. These signals are shared with the BMS, that is, the first control unit 12 during the vehicle's waking phase (that is, non-sleep mode). Conversely, during sleep mode, such signals are preferably intercepted by the second control unit 13, which allows the monitoring of the cells and thus the health of the first storage system 6 to continue.

Advantageously, the second control unit 13 consumes less energy than the first control unit 12, in particular less than or equal to half, preferably less than one third, than the first control unit 12. This difference is due to the fact that the BMS does not only manage cell monitoring but also performs a whole range of other energy-consuming functions such as controlling elements such as battery chargers and battery pack heating or cooling drivers.

In some non-limiting cases, as illustrated in one of the examples in Figure 2, the second control unit 13 belongs to the low-voltage circuit 9 and is directly supplied by the second storage system 10. In this way, compared to the power supply of the entire BMS, the consumption required for the second storage system 10 is reduced, allowing for longer monitoring even during extended stops of several days/weeks.

Alternatively or in addition (for example, if the charge level of the second storage system 10 is below a predetermined value), as illustrated in the non-limiting embodiment in Figure 2, the second control unit 13 is powered by the first storage system 6 via a power converter 14 interposed between the first storage system 6 and the second control unit 13 (of a known type and, therefore, not further detailed, to convert voltage from, for example, 1200 V, 800 V or 400 V to 24 V or 12 V).

According to some additional embodiments, as illustrated in Figures 1 and 3, the road vehicle 1 comprises a third electrical energy storage system 16. In particular, the second control unit 13 is exclusively powered by the third electrical energy storage system 16.

More specifically, the third storage system 16 is preferably configured to exclusively power the second control unit 13. In other words, the third control system 16 is not an integral part of the first storage system 6 or of the second storage system 10 and, therefore, also devotes part of its charge to the electric machine 5 or other loads 11.

Advantageously but without imposing limits, the third storage system 16 is rechargeable or replaceable.

In some non-limiting cases, the third storage system 16 is configured to be recharged by the first storage system 6 or the second storage system 10 upon reaching a predefined minimum charge value. In other words, if during a long sleep mode the third storage system 16 reaches a minimum charge level, it is recharged via the first storage system 6 or the second storage system 10, so that it can continue its monitoring activities. For example, the third storage system 16 could be recharged during a wake-up cycle of the first storage system 10, which may occur within a few days of the start of the sleep mode.

In other non-limiting cases, alternatively or in addition, the third storage system 16 is configured to be recharged by the first storage system 6 or the second storage system 10 every time the road vehicle 1 is switched on. Thus, since, as is known, the first 6 and second storage system 10 are also charged by the energy recovered during driving, it is possible to ensure that the third storage system 16 is fully charged each time the road vehicle 1 is switched off.

Advantageously but without imposing limits, the second control unit 13 is configured to wake up the first control unit 12 in the event of an alarming detection during monitoring of at least voltage and temperature of the multiple cells, that is, wherein the second control unit 13 is configured to send an activation signal AS that causes the first control unit 12 to be switched on; this, in turn, will send an alarm signal AL to a third control unit 15 (in particular a VCU) to cause the activation of some of the electrical loads 11 so as to warn the surroundings of the road vehicle 1 of a potential danger.

In other non-limiting cases, the alarm signal AL is directly sent from the second control unit 12 to the third control unit 15 or to the electrical loads 11.

Advantageously but without imposing limits, the alarm signal results in the activation of the horn and/or flashing lights and/or an audible warning of danger and/or a notification to an application that can be seen by a road vehicle 1 owner on a handheld device 17 and/or an alert to public safety agencies containing the location of the road vehicle 1 and a related request for action.

In addition, the actuators 11 that can be activated by the alarm signal AL also advantageously include a pyrotechnic device that, with its deflagration, isolates the battery pack, that is, the first storage system 6 in the event of an overcurrent or other thermal event.

Advantageously, but not necessarily, the low voltage LV is equal to or less than 48 V, in particular equal to 12 V.

Advantageously, but not necessarily, the high voltage HV is equal to or higher than 48 V, in particular equal to 48 V, preferably equal to or higher than 400 V, in particular 400 V or 800 V or 1200 V.

In use, therefore, during sleep mode of the road vehicle 1 in which the first control unit 12, that is, the BMS, is switched off, the second control unit 13 reads the voltage and temperature from each CSC of the first storage device 6, thereby monitoring the health of the cells comprising it. The second control unit 13 then assesses whether at least one of the detected voltages or temperatures is outside predefined safety threshold values and, if one is, sends the wake-up signal AS to the BMS, that is, to the first control unit 12, which is reactivated and sends in turn the alarm signal AL to the third control unit 15, that is, the VCU, which commands the horn, lights and warnings in order to alert a user of the road vehicle 1 and, above all, people in the vicinity and public safety agencies to restore a safe situation as soon as possible.

Although the invention described above makes particular reference to a very precise embodiment, it is not to be construed as limited to this embodiment, since all the variations, modifications or simplifications covered by the attached claims fall within its scope, such as, for example, a different type of storage system, verification device, or measurement method, etc.

The embodiments described herein may be combined with one another without departing from the scope of protection of this invention.

The vehicle described above has numerous advantages.

First of all, it allows continuous monitoring of the battery pack, significantly increasing safety around the vehicle 1, allowing those around it to perceive danger and, if necessary, alerting the public safety agencies or activating pyrotechnic disconnection or fire-fighting systems.

In addition, the energy consumption due to the continuous power supply of the BMS is significantly reduced, allowing continuous monitoring of the battery pack even during months-long stops.

In addition, with the power supply coming from the high-voltage HV storage system, or the low-voltage LV system, it is still possible to preserve the charge of the third storage system 16 or the power supply of the second control unit 13.

Finally, the electrical system 7 described above costs relatively little and is relatively simple as it is composed of commercial components.

### LIST OF REFERENCE NUMBERS IN THE FIGURES

- 1: vehicle
- 2: front wheels
- 3: rear wheels
- 4: powertrain system
- 5: electric machine
- 6: first storage system
- 7: electrical system
- 8: high-voltage circuit
- 9: low-voltage circuit
- 10: second storage system
- 11: electrical loads
- 12: control unit
- 13: second control unit
- 14: power converter
- 15: third VCU control unit
- 16: third storage system
- 17: handheld device
- AS: activation signal
- AL: alarm signal

## Claims

1. Road vehicle (1) comprising:
- four wheels (2, 3), including at least one pair of drive wheels (2, 3);
- an electric or hybrid powertrain system (4);
- an electrical system (7), which in turn comprises:
a high-voltage (HV) electric circuit (8) provided with a first electrical energy storage system (6) comprising a plurality of cells, and at least one electric machine (5) for moving the electric or hybrid powertrain system (4); wherein the first storage system (6) is configured to power the electric machine (5);
a low-voltage (LV) electric circuit (9) provided with a second electrical energy storage system (10) and a plurality of electrical loads (11); wherein the second storage system (10) is configured to power the plurality of electrical loads (11);
a first control unit (12), specifically a management system (BMS) of the first storage system (6) supplied by the second storage system (10); the first control unit (12) being configured to monitor and manage the first storage system (6), i.e., the battery pack;
the vehicle being **characterized by** comprising a second control unit (13), different from the first control unit (12), which is configured to operate when the road vehicle (1) is in a sleep mode, during which the first control unit (12) is turned off;
the second control unit being configured to monitor at least voltage and temperature of the plurality of cells of the first storage system (6).

2. Road vehicle (1) according to claim 1, wherein the second control unit (13) has a lower energy consumption than the first control unit (12), in particular less than or equal to half, preferably less than one-third, than the first control unit (13).

3. Road vehicle (1) according to claim 1 or 2, wherein the second control unit (13) belongs to the low-voltage circuit (9) and is directly supplied by the second storage system (10).

4. Road vehicle (1) according to claim 1 or 2, wherein the second control unit (13) belongs to the low-voltage circuit (9), but is powered by the first storage system (6) via a power converter (14) interposed between the first storage system (6) and the second control unit.

5. Road vehicle (1) according to claim 1 or 2 comprising a third electrical energy storage system (16), wherein the second control unit (13) is powered exclusively by the third electrical energy storage system (16).

6. Road vehicle (1) according to claim 5, wherein the third storage system (16) is configured to exclusively power the second control unit (13).

7. Road vehicle (1) according to claim 5 or 6, wherein the third storage system (16) is rechargeable or replaceable; wherein the third storage system (16) is configured to be recharged by the first storage system (6) or the second storage system (10) upon reaching a predefined minimum charge value.

8. Road vehicle (1) according to claim 5 or 6, wherein the third storage system (16) is rechargeable; wherein the third storage system (16) is configured to be recharged by the first storage system (6) or the second storage system (10) whenever the road vehicle (1) is turned on.

9. Road vehicle (1) according to any one of the preceding claims, wherein the second control unit (13) is configured to wake up the first control unit (12) in the event of an alarming detection during monitoring of at least voltage and temperature of the plurality of cells, i.e., wherein the second control unit (13) is configured to send an activation signal that causes the first control unit (12) to be turned on; which in turn will send an alarm signal to determine the activation of some of the electrical loads (11) so as to warn the surroundings of the road vehicle (1) of a potential danger.

10. Road vehicle (1) according to claim 9, wherein the alarm signal results in the activation of the horn, flashing lights, and/or an audible warning of danger, and/or a notification to an application that can be seen by a road vehicle (1) user on a handheld device (17) and/or an alert to public safety agencies with the location of the road vehicle (1) with a related request for action.
